# EUROPEAN PATENT SPECIFICATION

(11) **EP 3 597 667 B1**
(45) Date of publication and mention of the grant of the patent: **25.11.2026**
(21) Application number: 18767219.1
(22) Date of filing: 14.03.2018
(51) Int. Cl.: C08F 2/22, C08F 220/32, C09D 5/02, C08F 220/20, C08J 3/12, C09D 133/06, C08J 3/02, C08L 33/06, C09D 125/14, C09D 151/00

(54) **EMULSION, PRODUCTION METHOD THEREFOR, AND METHOD FOR FORMING COATING LAYER USING SAME**
EMULSION, HERSTELLUNGSVERFAHREN DAFÜR UND VERFAHREN ZUR FORMUNG EINER BESCHICHTUNGSSCHICHT UNTER VERWENDUNG DAVON
ÉMULSION, SON PROCÉDÉ DE PRODUCTION ET PROCÉDÉ DE FORMATION D'UNE COUCHE DE REVÊTEMENT L'UTILISANT

(30) Priority: 15.03.2017 KR 20170032264
(43) Date of publication of application: 22.01.2020
(73) Proprietor: Hanwha Chemical Corporation, Seoul 04541 (KR)
(72) Inventor: CHO, Dae Won, Seoul 07927 (KR); KIM, Hee Yun, Daejeon 34120 (KR); YEUM, Tae Hoon, Daejeon 34120 (KR); LEE, Su Jin, Daejeon 34128 (KR); CHOI, Jeong Hyun, Daejeon 34070 (KR)
(74) Representative: GLAWE DELFS MOLL
(86) International application number: PCT/KR2018/002998
(87) International publication number: WO 2018/169309

(56) References cited:
- WO-A1-2015/015827
- CN-A- 101 033 360
- CN-A- 101 585 895
- JP-A- 2005 171 253
- KR-A- 20110 032 505
- KR-A- 20160 008 418
- KR-A- 20160 020 488
- KR-A- 20180 050 919
- KR-B1- 100 521 992
- KR-B1- 101 781 813
- US-A- 4 151 143
- US-A1- 2006 122 318

## Description

### [Technical Field]

The present disclosure relates to an emulsion, a method of preparing the emulsion, and a method of forming a coating film using the emulsion.

### [Background Art]

As a method for protecting a surface of a substrate such as paper, film, wood, iron, etc., there is a method of coating the substrate surface with an oil-based resin. An oil-based resin includes an oil-based organic solvent as a solvent capable of improving the workability of a coating process and improving coating properties. However, such an oil-based resin is flammable and thus is vulnerable to fire, and an oil-based solvent remaining on a surface of a coating film may have harmful effects on the human body.

Accordingly, there is a need for the development of a novel coating material having excellent coating properties with respect to a substrate and excellent durability without flammability and toxicity. In view of the above, a method of using a water-based resin as a coating material may be considered. EP 3567070 A1 discloses a styrene/acrylic emulsion particle having a core-shell structure, an emulsion including the emulsion particle, and a method of manufacturing the emulsion.

### [Disclosure]

### [Technical Problem]

As an example of a method of preparing a styrene/acrylic emulsion which is one type of a water-based resin, there is a method of emulsion-polymerizing monomers using an alkali-soluble resin as an emulsifier.

Meanwhile, in preparing a styrene/acrylic emulsion having superior properties, it is important to secure polymerization stability. In addition, as fields to which a coating film using a styrene/acrylic emulsion is applied are diversified, the coating film is required to have various characteristics such as appearance, film properties, and durability.

However, since there is a trade-off among such characteristics in the case of general styrene/acrylic emulsions, it is not easy to control the characteristics. For example, when a crosslinkable monomer is used to improve the durability of a coating film in which an emulsion is used, polymerization stability of the emulsion deteriorates and the adhesion of a coating film to a substrate may deteriorate or a coating film might not be formed. On the other hand, when a glass transition temperature of an emulsion is lowered to improve film properties, durability such as hardness, water resistance, and chemical resistance may deteriorate.

Accordingly, it is an object of the present disclosure to provide an emulsion capable of forming a coating film having improvements in both film properties and durability which could not be conventionally provided together.

It is another object of the present disclosure to provide a method of preparing an emulsion capable of forming a coating film having improvements in both film properties and durability.

It is still another object of the present disclosure to provide a method of forming a coating film having improvements in both film properties and durability.

It should be noted that objects of the present disclosure are not limited to the above-described objects, and other objects of the present disclosure will be apparent to those skilled in the art from the following description.

### [Technical Solution]

According to an aspect of the present disclosure, the above and other objects can be accomplished by the provision of an emulsion including latex particles, wherein each of the latex particles includes a core portion formed of a polymer matrix having an internal network structure; and a shell portion surrounding the core portion.

The core portion may be formed by polymerizing a monomer mixture comprising a first monomer as a crosslinkable monomer having a ring-opening polymerizable reactive group, a second monomer as a multifunctional crosslinkable monomer not having a ring-opening polymerizable reactive group, and a third monomer as a non-crosslinkable monomer comprising an unsaturated ethylenic monomer.

The core portion may comprise a plurality of crosslinked main chains and side chains bonded to the main chains, wherein side chains may comprise cyclic ether groups.

Also, the side chains may comprise epoxy groups.

Also, the emulsion may have a viscosity of 50 to 1,000 cps and a glass transition temperature of 25 to 55 °C.

According to another aspect of the present disclosure, there is provided a method of preparing an emulsion, the method including a step of preparing an aqueous alkaline medium including an alkali-soluble resin dissolved therein, a step of adding a monomer mixture to the aqueous alkaline medium, and a step of emulsion-polymerizing the monomer mixture, wherein the monomer mixture includes a first monomer as a crosslinkable monomer having a ring-opening polymerizable reactive group, a second monomer as a multifunctional crosslinkable monomer not having a ring-opening polymerizable reactive group, and a third monomer as a non-crosslinkable monomer including an unsaturated ethylenic monomer.

The alkali-soluble resin may have a weight average molecular weight of 5,000 to 30,000 g/mol, a glass transition temperature of 30 to 120 °C, and an acid value of 70 to 180 mgKOH/g.

The first monomer may comprise one or more of glycidyl methacrylate, 3-(glycidoxypropyl)trimethoxysilane, and 2-(3,4-epoxycyclohexyl)ethyltriethoxysilane, and the second monomer may comprise one or more of trimethylolpropane trimethacrylate, triethylene glycol dimethacrylate, 1,6-hexanediol diacrylate, and 1,6-hexanediol dimethacrylate.

Also, a content of the second monomer may be smaller than a content of the first monomer.

Also, a sum of the weights of the first and second monomers may be 3 to 5% by weight based on a total monomer weight of the monomer mixture.

The first monomer may comprise monomers having epoxy groups as ring-opening polymerizable reactive groups, and, in the emulsion-polymerizing, at least a portion of the epoxy groups may not be polymerized.

Also, in the emulsion-polymerizing, the number of non-polymerized epoxy groups may be larger than the number of polymerized epoxy groups.

According to theother aspect of the present disclosure, there is provided a method of forming a coating film, the method including a step of preparing a coating composition including the emulsion according to an embodiment of the present disclosure; a step of applying the coating composition onto a substrate; and a step of drying the applied coating composition.

A crosslinking degree of a core portion of the emulsion after the drying may be larger than a crosslinking degree of the core portion of the emulsion before the drying.

Also, the drying may be performed at 20 to 100 °C.

The details of other embodiments are included in the detailed description and the drawings.

### [Advantageous Effects]

The emulsion according to an embodiment of the present disclosure can form a coating film having improvements in both film properties and durability which could not be conventionally provided together.

In addition, by the emulsion preparation method according to an embodiment of the present disclosure, an emulsion capable of forming a coating film having improvements in both film properties and durability, which could not be conventionally provided together, can be prepared.

Further, by the coating film formation method according to an embodiment of the present disclosure, improvements in both film properties and durability, which could not be conventionally provided together, can be accomplished.

The effects according to the embodiments of the present disclosure are not limited to those exemplified above and various other effects are included in the present specification.

### [Description of Drawings]

FIGS. 1 and 2 are drawings illustrating a method of forming a coating film according to an embodiment of the present disclosure.
FIG. 3 includes photographs showing results according to Experimental Example 6.

### [Modes of the Invention]

Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the invention to those skilled in the art, and the present disclosure will only be defined by the appended claims.

As used herein, the term "and/or" includes any and all combinations of one or more of the associated listed items. The numerical range indicated by using "to" represents a numerical range including the values described therebefore and thereafter as a lower limit and an upper limit, respectively. The term "about" or "approximately" means a value or numerical range within 20% of the value or numerical range described thereafter.

In the specification, the expression "alkali-soluble" refers to a property of being able to dissolve 10 g or more of a resin or a polymer in 1 L of deionized water at pH 7 or more at room temperature.

In the specification, the expression "emulsion" refers to a system wherein latex particles insoluble in a dispersion medium are dispersed in a dispersion medium. The "latex particles" refer to a particulate polymer prepared through emulsion polymerization and include emulsion polymer particles.

In the specification, the expression "epoxy group" refers to one oxygen atom directly bonding to two carbon atoms in a carbon chain or carbon ring to form a bridge. That is, an epoxy group refers to a divalent oxygen group bonded to two carbon atoms in a carbon chain or carbon ring.

Hereinafter, an emulsion according to exemplary embodiments of the present disclosure, a method of preparing the emulsion, and a method of forming a coating film are described in detail.

### Emulsion

The emulsion according to an exemplary embodiment of the present disclosure includes a dispersion medium and latex particles dispersed in the dispersion medium. The emulsion may be prepared by emulsion-polymerizing monomers using an alkali-soluble resin as an emulsifier.

The latex particles may have at least a partial core-shell structure. With regard to the core-shell structure, a core portion may include a polymer matrix, and a shell portion may be derived from an alkali-soluble resin and may at least partially surround the core portion.

In an exemplary embodiment, the alkali-soluble resin forming the shell portion may have a weight average molecular weight (Mw) of about 5,000 to 30,000 g/mol and an acid value of about 70 to 180 mgKOH/g. In addition, the alkali-soluble resin forming the shell portion may have a glass transition temperature of about 30 to 120 °C, or about 55 to 100 °C.

When an alkali-soluble resin having a weight average molecular weight, a glass transition temperature and/or an acid value within the above ranges is used as an emulsifier, latex particles having a nanometer-scale average particle diameter and a narrow unimodal particle size distribution may be prepared. In addition, a prepared emulsion may be provided with sufficient durability along with improved coating properties. For example, by configuring the alkali-soluble resin forming the shell portion to have a relatively high acid value and glass transition temperature compared to a polymer matrix, which is described below, forming the core portion, durability, such as hardness, of the coating film in which the emulsion is used may be reinforced and coating properties, such as wettability, thereof may be improved.

The alkali-soluble resin may be prepared by performing free-radical polymerization, e.g., continuous bulk polymerization, of styrene/acrylic monomers. **In** an exemplary embodiment, the alkali-soluble resin may be a polymer derived from a monomer mixture including one or more of a (meth)acrylic acid-based monomer and a non-acidic (meth)acrylic monomer, and a styrene-based monomer.

The styrene-based monomer may be styrene or α-methyl styrene, the (meth)acrylic acid-based monomer may be methacrylic acid or acrylic acid, and the (meth)acrylic monomer may be methyl acrylate, ethyl acrylate, butyl acrylate, 2-ethylhexyl acrylate, methyl methacrylate, ethyl methacrylate, butyl methacrylate, or 2-ethylhexyl methacrylate.

As a non-limiting example, the alkali-soluble resin may be prepared by performing continuous bulk polymerization of a composition including a monomer mixture, which includes about 5 to 75% by weight of a styrene-based monomer, about 10 to 40% by weight of a (meth)acrylic acid-based monomer, and about 15 to 45% by weight of a (meth)acrylic monomer, a polymerization initiator and a solvent at 120 to 300 °C. In the specification, the expression "monomer mixture" refers to a mixture only composed of one or more polymerizable monomers.

The polymerization initiator is not specifically limited as long as it can be used for polymerization of styrene/acrylic monomers and may be, for example, an alkyl peroxy benzoate-based initiator. Alternatively, an initiator having a half-life of about 10 hours at 90 to 120 °C may be used. For example, the initiator may include t-butyl peroxybenzoate. The polymerization initiator may be included in an amount of about 0.001 to 2 parts by weight based on 100 parts by weight of the monomer mixture.

The solvent may include dipropylene glycol methyl ether and water. When a mixed solvent of dipropylene glycol methyl ether and water is used as a solvent, the reaction between a solvent and a resin, e.g., esterification, may be inhibited, whereby the viscosity of the alkali-soluble resin and/or the temperature inside the reactor may be easily controlled. The solvent may be included in an amount of about 3 to 20 parts by weight based on 100 parts by weight of the monomer mixture.

Meanwhile, the core portion may be formed of a polymer matrix having an internal network structure. The core portion may include a plurality of crosslinked polymer main chains. **In** particular, the core portion may be formed of a polymer matrix derived from an unsaturated ethylenic monomer and a crosslinkable monomer. The polymer matrix may be formed by polymerization of monomers surrounded by an emulsifier during emulsion polymerization.

In an exemplary embodiment, the core portion may be a polymer matrix derived from a monomer mixture including a first monomer as a crosslinkable monomer having a ring-opening polymerizable reactive group, a second monomer as a multifunctional crosslinkable monomer not having a ring-opening polymerizable reactive group, and a third monomer as a non-crosslinkable monomer including an unsaturated ethylenic monomer. In the specification, the expression "crosslinkable monomer" refers to a monomer capable of forming a polymer with a network structure by bonding between linear polymer chains, and the expression "non-crosslinkable monomer" refers to a monomer that participates in the formation of linear polymer chains, but is not crosslinkable.

The first monomer may be a ring-opening polymerizable monomer having a cyclic reactive group. The first monomer may form a polymer with a network structure because cyclic reactive groups thereof are opened during polymerization and, accordingly, two or more reaction sites are generated. For example, the first monomer may include a cyclic ether group, a cyclic ester group, or a cyclic amide group as a ring-opening polymerizable reactive group. That is, the first monomer may be an epoxide compound, a lactam compound, or a lactone compound. In an exemplary embodiment, the first monomer may include a compound having an epoxy group as a ring-opening polymerizable reactive group, e.g., one or more of glycidyl methacrylate, 3-(glycidoxypropyl)trimethoxysilane, and 2-(3,4-epoxycyclohexyl)ethyltriethoxysilane, but the present disclosure is not limited thereto.

The second monomer may be a multifunctional crosslinking compound. For example, the second monomer may be a bifunctional crosslinking compound or a trifunctional crosslinking compound. In the case of the second monomer, a plurality of reactive groups thereof respectively participate in the formation of different polymer chains to form a polymer with a network structure. In an exemplary embodiment, the second monomer may include one or more of trimethylolpropane trimethacrylate, triethylene glycol dimethacrylate, 1,6-hexanediol diacrylate, and 1,6-hexanediol dimethacrylate.

The third monomer may include one or more of a (meth)acrylic acid-based monomer, a non-acidic (meth)acrylic monomer, and a styrene-based monomer, as an unsaturated ethylenic monomer.

The styrene-based monomer may be styrene or α-methyl styrene, the (meth)acrylic acid-based monomer may be methacrylic acid or acrylic acid, and the (meth)acrylic monomer may be methyl acrylate, ethyl acrylate, butyl acrylate, 2-ethylhexyl acrylate, glycidyl acrylate, hexanediol acrylate, hexanediol diacrylate, trimethylolpropane triacrylate, methyl methacrylate, ethyl methacrylate, butyl methacrylate, 2-ethylhexyl methacrylate, glycidyl methacrylate, hexanediol methacrylate, hexanediol dimethacrylate, or trimethylolpropane trimethacrylate.

In some embodiments, the core portion may further include side chains bonded to the polymer main chains. Here, the side chains may be side chains including a cyclic ether group, a cyclic ester group, or a cyclic amide group. The side chains may be derived from an unreacted first monomer. In other words, at least a portion of the first monomer as a crosslinkable monomer having a ring-opening polymerizable reactive group may remain in an unreacted state. For example, when the first monomer includes glycidyl methacrylate, a methacrylic group at an end of glycidyl methacrylate participates in emulsion polymerization to form polymer chains, whereas an epoxy group at another end of glycidyl methacrylate may remain in an unreacted state.

For example, polymerization of about 60 mol% or less, or about 50 mol% or less, or about 40 mol% or less of the total reactive groups of the first monomer is completed, which may contribute to the formation of a crosslinked structure of the core portion, and at least a portion of about 40 mol% or more, or about 50 mol% or more, or about 60 mol% or more of the reactive groups of the first monomer may maintain an unreacted state. As described in a method of forming a coating film below, the side chains having unreacted reactive groups may be additionally crosslinked in a process of forming a coating film. As a non-limiting example, the side chains may include epoxy groups.

The core portion of each of the latex particles according to the embodiment includes an unsaturated ethylenic monomer and a plurality of different crosslinkable monomers. Here, when at least a portion of the crosslinkable monomers in an emulsion state is maintained in an unreacted state, a crosslinking degree of the core portion may be kept relatively low.

Accordingly, a minimum film formation temperature for the formation of a coating film using the emulsion may be lowered and film properties and flexibility of an emulsion may be improved. In addition, since a crosslinking degree of the core portion is sufficiently low, a glass transition temperature of the emulsion may be set to be relatively high, whereby hardness and durability of a coating film may be further improved. In addition, since the content of a film-forming agent may be minimized, a solid content can be designed relatively freely from volatile organic compound (VOC) regulatory requirements. In other words, by using a plurality of different crosslinkable monomers, latex particles with a polymer matrix which may be additionally crosslinked after the formation of an emulsion may be prepared, and an emulsion capable of forming a coating film having improvements in both film properties and durability, which could not be conventionally provided together, may be provided.

In addition, the emulsion including the latex particles according to the embodiment may have a viscosity of 50 to 1,000 cps and a glass transition temperature of about 25 to 55 °C. In addition, the emulsion may have an acid value of about 100 mgKOH/g or less. By keeping a crosslinking degree of the core portions of the latex particles relatively low in an emulsion state, grit and/or scale may be lowered and polymerization stability may be secured.

### Emulsion preparation method

A method of preparing an emulsion according to the embodiment includes a step of preparing an aqueous alkaline medium including an alkali-soluble resin dissolved therein, a step of adding a monomer mixture to the aqueous alkaline medium, and a step of emulsion-polymerizing the monomer mixture. The monomer mixture according to the embodiment includes a first monomer as a crosslinkable monomer having a ring-opening polymerizable reactive group, a second monomer as a multifunctional crosslinkable monomer not having a ring-opening polymerizable reactive group, and a third monomer as a non-crosslinkable monomer including an unsaturated ethylenic monomer.

A continuous phase, i.e., a dispersion medium, used for the emulsion polymerization may be an aqueous medium with basicity. For example, the aqueous alkaline medium may include water, e.g., ammonia, potassium hydroxide, and/or sodium hydroxide dissolved in deionized water. The pH of the aqueous alkaline medium may be controlled considering intrinsic properties, such as viscosity and odor, etc. of the emulsion and required properties such as film properties, durability, and dispersibility. The step of preparing an aqueous alkaline medium including an alkali-soluble resin dissolved therein may include a step of dispersing the alkali-soluble resin in an aqueous medium and then adding an alkaline substance/medium thereto or a step of directly dissolving the alkali-soluble resin in an aqueous alkaline medium.

In an exemplary embodiment, the alkali-soluble resin may have a weight average molecular weight (Mw) of about 5,000 to 30,000 g/mol and an acid value of about 70 to 180 mgKOH/g. In addition, the alkali-soluble resin may have a glass transition temperature of about 30 to 120 °C or about 55 to 100 °C.

The alkali-soluble resin added to the aqueous alkaline medium may function similarly to an anionic emulsifier. The alkali-soluble resin is dissolved in the aqueous alkaline medium to form micelles, and the monomer mixture may be polymerized in a state of being surrounded by the micelles. In addition, as described above, by using the alkali-soluble resin having the controlled weight average molecular weight, glass transition temperature, acid value, and the like as an emulsifier, latex particles may have a nanometer-scale average particle diameter and a narrow unimodal particle size distribution. In addition, since a separate anionic or non-ionic emulsifier, other than the alkali-soluble resin, is not used, an emulsion having excellent storage stability and superior transparency may be prepared.

The alkali-soluble resin may be added in an amount of about 15% to 60% by weight based on a total amount of solids, e.g., the alkali-soluble resin, the monomer mixture, and the initiator, added to the aqueous medium. When the alkali-soluble resin is added in an amount of less than 15% by weight, the latex particles are not provided with sufficient stability and gelation of an emulsion may proceed. In addition, when the alkali-soluble resin is added in an amount of greater than 60% by weight, durability, such as water resistance and alcohol resistance, of a coating film in which the emulsion is used may deteriorate.

Subsequently, the aqueous alkaline medium to which the alkali-soluble resin has been added may be heated and an initiator may be added thereto. The heating step of the aqueous alkaline medium may be a step of re-setting the temperature of the reaction system to the emulsion polymerization temperature. For example, the aqueous alkaline medium may be heated to about 70 to 90 °C. The initiator may be added batchwise before reaction initiation or continuously or semi-continuously during the reaction considering polymerization stability, reactivity, and the like. For example, the initiator may be continuously added over a period of about 60 to 180 minutes. The initiator used in the emulsion polymerization may be a persulfate-based initiator such as ammonium persulfate, potassium persulfate, or sodium persulfate.

After initiating the step of adding the initiator, a step of adding a monomer mixture may be performed. A monomer mixture according to the embodiment includes a first monomer as a crosslinkable monomer having a ring-opening polymerizable reactive group, a second monomer as a multifunctional crosslinkable monomer not having a ring-opening polymerizable reactive group, and a third monomer as a non-crosslinkable monomer including an unsaturated ethylenic monomer.

In an exemplary embodiment, approximately 5 to 15 minutes after the initiation of continuous addition of the initiator, the monomer mixture may be continuously added over a period of about 60 to 180 minutes. By adding the monomer mixture after the initiator is added and the reaction system is set to a polymerizable state, emulsion polymerization is performed in a state in which the monomer mixture is surrounded by micelles that are formed by the alkali-soluble resin dissolved in the aqueous medium, thereby forming the core portions of the latex particles.

The first monomer may be a monomer having a ring-opening polymerizable cyclic reactive group. The first monomer may include one or more compounds having an epoxy group as a ring-opening polymerizable reactive group, e.g., glycidyl methacrylate, 3-(glycidoxypropyl)trimethoxysilane, and 2-(3,4-epoxycyclohexyl)ethyltriethoxysilane.

The second monomer may be a multifunctional crosslinking compound. For example, the second monomer may include one or more of trimethylolpropane trimethacrylate, triethylene glycol dimethacrylate, 1,6-hexanediol diacrylate, and 1,6-hexanediol dimethacrylate.

The third monomer may include one or more of a (meth)acrylic acid-based monomer, a non-acidic (meth)acrylic monomer, and a styrene-based monomer, as an unsaturated ethylenic monomer.

In an exemplary embodiment, the sum of the weights of the first and second monomers, i.e., the weight of the crosslinkable monomers, may be about 3 to 5% by weight based on a total monomer weight of the monomer mixture. When the weight of the crosslinkable monomer is 3% by weight or more, a crosslinked structure inside the core portion may be sufficiently formed. When the weight of the crosslinkable monomer is 5% by weight or less, polymerization stability may be secured.

In addition, a weight-based content of the second monomer may be less than that of the first monomer. In the step in which the monomer mixture is emulsion-polymerized, at least a portion of the first monomer or at least a portion of cyclic reactive groups (e.g., epoxy groups) of the first monomer might not participate in polymerization. On the other hand, most of the second monomer participates in polymerization to complete polymerization. In the case of the method of preparing the emulsion according to the embodiment, when the content of the first monomer partially maintaining an unreacted state is greater than the content of the second monomer, a crosslinking degree of core portions of the latex particles may be kept relatively low. Accordingly, sufficient polymerization stability may be secured and other properties required in an emulsion may be easily controlled.

For example, the number of the cyclic reactive groups of the first monomer which do not participate in the reaction and maintain an unreacted state in the emulsion polymerization step may be greater than the number of the cyclic reactive groups of the first monomer which participate in polymerization in the emulsion polymerization step. A first monomer maintaining a partially unreacted state may remain in a form of side chains bonded to the polymer main chains forming the core portions of the latex particles, but the present disclosure is not limited thereto.

### Method of forming coating film

A method of forming a coating film according to the embodiment includes a step of preparing a coating composition, a step of applying the coating composition onto a substrate, and a step of drying the applied coating composition.

The coating composition may include the emulsion according to the present disclosure. The emulsion has been described above, and thus, a detailed description thereof is omitted. In some embodiments, the coating composition may further include, other than an emulsion, additives such as a film-forming agent and a dispersant, and other solvents.

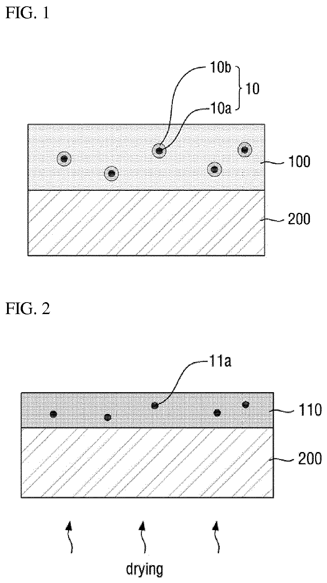

FIG. 1 illustrates a step of applying a coating composition onto a substrate. Referring to FIG. **1****,** a coating composition 100 is applied onto a substrate 200. A method of applying the coating composition 100 is not specifically limited and, for example, a coating process may be used.

In the step of applying the coating composition 100, the coating composition 100 may include the latex particles 10. The latex particles 10 may have at least a partial core-shell structure. The core portion 10a may be formed of a polymer matrix having an internal network structure. For example, the core portion 10a may be a polymer matrix derived from a monomer mixture including a first monomer as a crosslinkable monomer having a ring-opening polymerizable reactive group, a second monomer as a multifunctional crosslinkable monomer not having a ring-opening polymerizable reactive group, and a third monomer as a non-crosslinkable monomer including an unsaturated ethylenic monomer. The latex particles 10 may be substantially identical to the latex particles included in the emulsion according to an embodiment of the present disclosure.

FIG. 2 illustrates a step of drying a coating composition. Referring to FIG. 2, a coating composition is dried, thereby forming a coating film 110. The step of drying a coating composition may be performed, for example, at about 20 to 100 °C.

In the step of drying a coating composition, a solvent is removed from the composition, thereby forming the coating film 110. In this case, the shell portion of the latex particles may at least partially collapse and may be mixed with the coating film 110. On the other hand, a core portion 11a of the latex particles is additionally polymerized or crosslinked and may remain inside the coating film 110. That is, a crosslinking degree of the core portion 11a after the drying step may be greater than a crosslinking degree of the core portion 10a before the drying step. For example, at least a portion of the first monomer (i.e., side chains bonded to main chains of latex particles) maintaining an unreacted state in an emulsion state may be additionally polymerized or crosslinked in the drying step, but the present disclosure is not limited thereto.

As described above, since the emulsion according to the present disclosure may keep a crosslinking degree of core portions of the latex particles relatively low, superior film properties and flexibility may be provided and a coating film may be easily formed. Further, when a coating film is formed using the emulsion, a crosslinking degree of the core portions may increase, whereby appearance, gloss, and durability of the coating film may be further improved.

Hereinafter, the emulsion, the method of preparing the same, and the method of forming a coating film using the emulsion according to an exemplary embodiment of the present disclosure are described in more detail with reference to preparation examples, comparative examples, and experimental examples.

### Preparation Examples

### <Preparation Example 2>

An emulsion was prepared in the same manner as in Preparation Example 1, except that 817.2 g of a monomer mixture including 382.8 g of styrene, 128.1 g of methyl methacrylate, 281.7 g of ethylhexyl acrylate, 20.4 g of 3-(glycidoxypropyl)trimethoxysilane, and 4.2 g of hexanediol diacrylate was used.

### <Preparation Example 3>

An emulsion was prepared in the same manner as in Preparation Example 1, except that 817.2 g of a monomer mixture including 382.8 g of styrene, 128.1 g of methyl methacrylate, 281.7 g of ethylhexyl acrylate, 20.4 g of 2-(3,4-epoxycyclohexyl)ethyltriethoxysilane, and 4.2 g of hexanediol diacrylate was used.

### <Comparative Example 1>

An emulsion was prepared in the same manner as in Preparation Example 1, except that 817.2 g of a monomer mixture including 382.8 g of styrene, 128.1 g of methyl methacrylate, 281.7 g of ethylhexyl acrylate, and 24.6 g of glycidyl methacrylate was used.

### <Comparative Example 2>

An emulsion was prepared in the same manner as in Preparation Example 1, except that 817.2 g of a monomer mixture including 374.7 g of styrene, 128.1 g of methyl methacrylate, 273.3 g of ethylhexyl acrylate, and 41.1 g of glycidyl methacrylate was used.

### <Comparative Example 3>

An emulsion was prepared in the same manner as in Preparation Example 1, except that 817.2 g of a monomer mixture including 382.8 g of styrene, 128.1 g of methyl methacrylate, 281.7 g of ethylhexyl acrylate, and 24.6 g of hexanediol diacrylate was used.

### <Comparative Example 4>

An emulsion was prepared in the same manner as in Preparation Example 1, except that 817.2 g of a monomer mixture including 382.8 g of styrene, 128.1 g of methyl methacrylate, 281.7 g of ethylhexyl acrylate, and 24.6 g of 3-(glycidoxypropyl)trimethoxysilane was used.

### <Comparative Example 5>

An emulsion was prepared in the same manner as in Preparation Example 1, except that 817.2 g of a monomer mixture including 382.8 g of styrene, 128.1 g of methyl methacrylate, 281.7 g of ethylhexyl acrylate, and 24.6 g of trimethylolpropane trimethacrylate was used.

### Experimental Examples

### <Experimental Example 1: Grit content measurement>

Each of the emulsions according to the Preparation Examples and Comparative Examples was filtered using a 300 mesh sieve, and then the weight of sieved particles was measured. Results are summarized in Table 1.

### <Experimental Example 2: Particle diameter measurement>

An average particle diameter and particle size distribution of latex particles included in each of the emulsions according to the Preparation Examples and Comparative Examples were measured using a particle size analyzer (model name: MicrotracTM 150). Results are summarized in Table 1.

### <Experimental Example 3: Measurement of minimum film-forming agent amount>

100 g of each of the emulsions according to the Preparation Examples and Comparative Examples was mixed with a film-forming agent (DPM/DPnB=1/1). A resultant mixture was applied on an opacity chart (wet film thickness: 50 µm). Subsequently, a minimum content of film-forming agent allowing the formation of a coating film without breakage under a 25 °C drying condition was measured. Results are summarized in Table 2. In Experimental Example 3, film properties are better as a content of the film-forming agent decreases.

### <Experimental Example 4: Hardness measurement>

Each of the emulsions according to the Preparation Examples and Comparative Examples was applied on a glass substrate (wet film thickness: 100 µm), and then dried at 50 °C for 24 hours. In addition, hardness was measured using a pendulum hardness tester (model name: SP-SP0500) and a pencil hardness tester (model name: KP-M5000M). Results are summarized in Table 2. In Experimental Example 4, pendulum hardness is better as a count increases, and pencil hardness is superior in an order of 1H>HB>1B>2B.

### <Experimental Example 5: Water resistance measurement>

100 g of each of the emulsions according to the Preparation Examples and Comparative Examples was mixed with the minimum content of the film-forming agent (DPM/DPnB = 1/1) as a result obtained according to Experimental Example 3. A resultant mixture was applied on an opacity chart (wet film thickness: 50 µm), and then dried at 100 °C for one minute. Then, a 30 ml vial containing water was turned upside on the dried coating film, and a state in which water and the coating film were in contact with each other was maintained for 24 hours. Subsequently, water was removed and whether or not clouding of a coating film occurred was observed. Results are summarized in Table 2. In Experimental Example 5, the absence of clouding indicates superior water resistance.

### <Experimental Example 6: Alcohol resistance measurement>

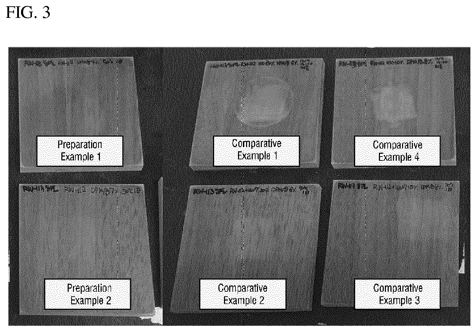

100 g of each of the emulsions according to the Preparation Examples and Comparative Examples was mixed with the minimum content of the film-forming agent (DPM/DPnB = 1/1) as a result obtained according to Experimental Example 3. A resultant mixture was applied on an opacity chart (wet film thickness: 50 µm), and then dried at 100 °C for one minute. Then, a 30 ml vial containing a 50% ethanol solution (water: ethanol = 1:1) was turned upside on the dried coating film, and a state in which the ethanol solution and the coating film were in contact with each other was maintained for one hour. Subsequently, the ethanol solution was removed and whether or not clouding of a coating film occurred was observed. Results are summarized in Table 2 and FIG. 3. In Experimental Example 6, the absence of clouding indicates superior alcohol resistance.

**[Table 1]**

| | Grit (ppm) | Solid (% by weight) | pH | Viscosity (cps) | Average particle diameter (nm) |
|---|---|---|---|---|---|
| Preparation Example 2 | 70 | 41.4 | 8.6 | 74 | 70.2 |
| Preparation Example 3 | 85 | 41.5 | 8.8 | 105 | 68.2 |
| Comparative Example 1 | 61 | 41.8 | 8.7 | 400 | 72.5 |
| Comparative Example 2 | 3000 | 41.5 | 8.8 | 1200 | Bimodal distribution |
| Comparative Example 3 | 1299 | 41.6 | 8.6 | 112 | Bimodal distribution |
| Comparative Example 4 | 1391 | 41.5 | 8.6 | 90 | 83.3 |
| Comparative Example 5 | 1562 | 41.6 | 8.7 | 150 | 85.6 |

**[Table 2]**

| | Minimum film-forming agent amount (parts by weight) | Pendulum hardness (count) | Pencil hardness | Water resistance | Alcohol resistance |
|---|---|---|---|---|---|
| Preparation Example 2 | 5.5 | 160 | HB | × | × |
| Preparation Example 3 | 6.0 | 158 | HB | × | × |
| Comparative Example 1 | 6.0 | 84 | 1B | × | ⊚ |
| Comparative Example 2 | 9.0 | 145 | HB | × | ○ |
| Comparative Example 3 | 8.0 | 99 | 1B | × | ○ |
| Comparative Example 4 | 7.5 | 111 | 1B | × | ⊚ |
| Comparative Example 5 | 8.0 | 115 | 1B | × | ⊚ |

Referring to Table 1, it can be confirmed that the emulsions according to the Preparation Examples include latex particles having a unimodal particle size distribution and a nanometer-scale average particle diameter. In addition, it can be confirmed that, in the Preparation Examples, superior grit content and viscosity are exhibited as emulsion polymerization proceeds. On the other hand, it can be confirmed that the emulsions according to Comparative Example 1 and Comparative Example 2 have very high viscosity. In addition, it can be confirmed that, in the cases of the emulsions according to Comparative Examples 2 to 5, poor polymerization stability, such as a grit content increase, is exhibited.

Referring to Table 2, it can be confirmed that the emulsions according to the Preparation Examples have a relatively low minimum film-forming agent content, thereby confirming superior coatability. On the other hand, it can be confirmed that the emulsions according to the Comparative Examples have a relatively high minimum film-forming agent content.

In addition, referring to Table 2 and FIG. 3, it can be confirmed that the coating films including the emulsions according to the Preparation Examples have superior hardness, water resistance, and alcohol resistance, thereby having excellent durability. That is, it can be confirmed that the emulsions according to the Preparation Examples have excellent polymerization stability and may secure both film properties and durability which could not be conventionally provided together because of a trade-off relationship. On the other hand, the coating films including the emulsions according to the Comparative Examples have low hardness and alcohol resistance.

While this disclosure has been particularly shown and described with reference to embodiments thereof, it will be understood by those skilled in the art that this disclosure is not limited to the embodiments and various changes in form and details may be made therein without departing from the spirit and scope of the invention. For example, each component particularly described in the embodiments of the present disclosure may be modified. In addition, it should be understood that such modifications and applications are to be construed as being within the scope of the present disclosure as defined by the appended claims.

## Claims

1. An emulsion, comprising latex particles,
wherein each of the latex particles comprises a core portion formed of a polymer matrix having an internal network structure; and a shell portion which surrounds the core portion, and
the latex particles are manufactured by the steps of:
preparing an aqueous alkaline medium comprising an alkali-soluble resin dissolved therein;
adding a monomer mixture to the aqueous alkaline medium; and
emulsion-polymerizing the monomer mixture,
wherein the core portion is formed by polymerizing a monomer mixture comprising a first monomer as a crosslinkable monomer having a ring-opening polymerizable reactive group, a second monomer as a multifunctional crosslinkable monomer not having a ring-opening polymerizable reactive group, and a third monomer as a non-crosslinkable monomer comprising an unsaturated ethylenic monomer, the first monomer comprises one or more of 3-(glycidoxy-propyl)trimethoxysilane, and 2-(3,4-epoxycyclohexyl)ethyltriethoxysilane, the second monomer comprises one or more of trimethylolpropane trimethacrylate, triethylene glycoldimethacrylate, 1,6-hexanediol diacrylate, and 1,6-hexanediol dimethacrylate,
the third monomer comprises one or more of (meth)acrylic acid-based monomer, a non-acidic (meth)acrylic monomer, and a styrene-based monomer as an unsaturated ethylenic monomer, and
a sum of weights of the first and second monomers is 3 to 5% by weight based on a total monomer weight of the monomer mixture.

2. The emulsion according to claim 1, wherein the core portion comprises a plurality of crosslinked main chains and side chains bonded to the main chains, wherein side chains comprise cyclic ether groups.

3. The emulsion according to claim 2, wherein the side chains comprise epoxy groups.

4. The emulsion according to claim 3, wherein the emulsion has a viscosity of 50 to 1,000 cps and a glass transition temperature of 25 to 55 °C.

5. A method of preparing an emulsion, the method comprising:
preparing an aqueous alkaline medium comprising an alkali-soluble resin dissolved therein;
adding a monomer mixture to the aqueous alkaline medium; and
emulsion-polymerizing the monomer mixture,
wherein the emulsion is comprised of latex particles, each of the latex particles comprises a core portion formed of a polymer matrix having an internal network structure; and a shell portion which surrounds the core portion;
wherein the monomer mixture comprising a first monomer as a crosslinkable monomer having a ring-opening polymerizable reactive group, a second monomer as a multifunctional crosslinkable monomer not having a ring-opening polymerizable reactive group, and a third monomer as a non-crosslinkable monomer comprising an unsaturated ethylenic monomer,
the first monomer comprises one or more of 3-(glycidoxy-propyl)trimethoxysilane, and 2-(3,4-epoxycyclohexyl)ethyltriethoxysilane,
the second monomer comprises one or more of trimethylolpropane trimethacrylate, triethylene glycoldimethacrylate, 1,6-hexanediol diacrylate, and 1,6-hexanediol dimethacrylate,
the third monomer comprises one or more of (meth)acrylic acid-based monomer, a non-acidic (meth)acrylic monomer, and a styrene-based monomer as an unsaturated ethylenic monomer, and
a sum of weights of the first and second monomers is 3 to 5% by weight based on a total monomer weight of the monomer mixture.

6. The method according to claim 5, wherein the alkali-soluble resin has a weight average molecular weight of 5,000 to 30,000 g/mol, a glass transition temperature of 30 to 120 °C, and an acid value of 70 to 180 mgKOH/g.

7. The method according to claim 5, wherein the first monomer comprises monomers having epoxy groups as ring-opening polymerizable reactive groups, and, in the emulsion-polymerizing, at least a portion of the epoxy groups is not polymerized.

8. The method according to claim 7, wherein, in the emulsion-polymerizing, the number of non-polymerized epoxy groups is larger than the number of polymerized epoxy groups.

9. A method of forming a coating film, the method comprising:
preparing a coating composition comprising the emulsion according to claim 1;
applying the coating composition onto a substrate; and
drying the applied coating composition.

10. The method according to claim 9, wherein a crosslinking degree of a core portion of the emulsion after the drying is larger than a crosslinking degree of the core portion of the emulsion before the drying.

11. The method according to claim 10, wherein the drying is performed at 20 to 100 °C.

## Patentansprüche

1. Emulsion umfassend Latexpartikel,
wobei jedes der Latexpartikel einen Kernteil, der aus einer Polymermatrix mit einer internen Netzwerkstruktur gebildet ist, und einen Schalenteil, der den Kernteil umgibt, umfasst, und
die Latexpartikel durch die Schritte hergestellt sind:
Herstellen eines wässrigen alkalischen Mediums umfassend ein darin gelöstes alkalilösliches Harz;
Zugeben eines Monomergemischs zu dem wässrigen alkalischen Medium; und
Emulsionspolymerisieren des Monomergemischs,
wobei der Kernteil durch Polymerisieren eines Monomergemischs umfassend ein erstes Monomer als ein vernetzbares Monomer mit einer ringöffnenden polymerisierbaren reaktiven Gruppe, ein zweites Monomer als ein multifunktionelles vernetzbares Monomer ohne eine ringöffnende polymerisierbare reaktive Gruppe und ein drittes Monomer als ein nicht vernetzbares Monomer, das ein ungesättigtes ethylenisches Monomer umfasst, gebildet wird,
das erste Monomer eines oder mehrere von 3-(Glycidoxypropyl)trimethoxysilan und 2-(3,4-Epoxycyclohexyl)ethyltriethoxysilan umfasst,
das zweite Monomer eines oder mehrere von Trimethylolpropantrimethacrylat,
Triethylenglykoldimethacrylat, 1,6-Hexandioldiacrylat und 1,6-Hexandioldimethacrylat umfasst,
das dritte Monomer eines oder mehrere von Monomer auf (Meth)acrylsäurebasis, einem nicht-sauren (Meth)acrylmonomer und einem Monomer auf Styrolbasis als ungesättigtes ethylenisches Monomer umfasst, und
die Summe der Gewichte des ersten und des zweiten Monomers 3 bis 5 % Gew.-%, bezogen auf das Gesamtgewicht des Monomergemischs, beträgt.

2. Emulsion nach Anspruch 1, wobei der Kernteil eine Mehrzahl von vernetzten Hauptketten und an die Hauptketten gebundenen Seitenketten umfasst, wobei Seitenketten cyclische Ethergruppen umfassen.

3. Emulsion nach Anspruch 2, wobei die Seitenketten Epoxygruppen umfassen.

4. Emulsion nach Anspruch 3, wobei die Emulsion eine Viskosität von 50 bis 1.000 cps und eine Glasübergangstemperatur von 25 bis 55 °C aufweist.

5. Verfahren zur Herstellung einer Emulsion, wobei das Verfahren umfasst:
Herstellen eines wässrigen alkalischen Mediums umfassend ein darin gelöstes alkalilösliches Harz;
Zugeben eines Monomergemischs zu dem wässrigen alkalischen Medium; und
Emulsionspolymerisieren des Monomergemischs,
wobei die Emulsion aus Latexpartikeln besteht, wobei jedes der Latexpartikel einen Kernteil, der aus einer Polymermatrix mit einer internen Netzwerkstruktur gebildet ist, und einen Schalenteil, der den Kernteil umgibt, umfasst;
wobei das Monomergemisch ein erstes Monomer als ein vernetzbares Monomer mit einer ringöffnenden polymerisierbaren reaktiven Gruppe, ein zweites Monomer als ein multifunktionelles vernetzbares Monomer ohne eine ringöffnende polymerisierbare reaktive Gruppe und ein drittes Monomer als ein nicht vernetzbares Monomer, das ein ungesättigtes ethylenisches Monomer umfasst, umfasst,
das erste Monomer eines oder mehrere von 3-(Glycidoxypropyl)trimethoxysilan und 2-(3,4-Epoxycyclohexyl)ethyltriethoxysilan umfasst,
das zweite Monomer eines oder mehrere von Trimethylolpropantrimethacrylat,
Triethylenglykoldimethacrylat, 1,6-Hexandioldiacrylat und 1,6-Hexandioldimethacrylat umfasst,
das dritte Monomer eines oder mehrere von Monomer auf (Meth)acrylsäurebasis, einem nicht-sauren (Meth)acrylmonomer und einem Monomer auf Styrolbasis als ungesättigtes ethylenisches Monomer umfasst, und
die Summe der Gewichte des ersten und des zweiten Monomers 3 bis 5 % Gew.-%, bezogen auf das Gesamtgewicht des Monomergemischs, beträgt.

6. Verfahren nach Anspruch 5, wobei das alkalilösliche Harz ein gewichtsmittleres Molekulargewicht von 5.000 bis 30.000 g/mol, eine Glasübergangstemperatur von 30 bis 120 °C und eine Säurezahl von 70 bis 180 mgKOH/g aufweist.

7. Verfahren nach Anspruch 5, wobei das erste Monomer Monomere mit Epoxygruppen als ringöffnende polymerisierbare reaktive Gruppen umfasst und bei der Emulsionspolymerisation wenigstens ein Teil der Epoxygruppen nicht polymerisiert wird.

8. Verfahren nach Anspruch 7, wobei bei der Emulsionspolymerisation die Anzahl der nichtpolymerisierten Epoxygruppen größer als die Anzahl der polymerisierten Epoxygruppen ist.

9. Verfahren zum Bilden eines Beschichtungsfilms, wobei das Verfahren umfasst:
Herstellen einer Beschichtungszusammensetzung umfassend die die Emulsion nach Anspruch 1;
Aufbringen der Beschichtungszusammensetzung auf ein Substrat; und
Trocknen der aufgebrachten Beschichtungszusammensetzung.

10. Verfahren nach Anspruch 9, wobei ein Vernetzungsgrad eines Kernteils der Emulsion nach dem Trocknen größer ist als ein Vernetzungsgrad des Kernteils der Emulsion vor dem Trocknen.

11. Verfahren nach Anspruch 10, wobei das Trocknen bei 20 bis 100 °C durchgeführt wird.

## Revendications

1. Émulsion, comprenant des particules de latex,
dans laquelle chacune des particules de latex comprend une partie noyau formée d'une matrice de polymère ayant une structure de réseau interne ; et une partie enveloppe qui entoure la partie noyau, et
les particules de latex sont fabriquées par les étapes de :
préparation d'un milieu alcalin aqueux comprenant une résine soluble dans un alcali dissoute dans celui-ci ;
ajout d'un mélange de monomères au milieu alcalin aqueux ; et
polymérisation en émulsion du mélange de monomères,
dans laquelle la partie noyau est formée par polymérisation d'un mélange de monomères comprenant un premier monomère en tant que monomère réticulable ayant un groupe réactif polymérisable par ouverture de cycle, un second monomère en tant que monomère réticulable multifonctionnel n'ayant pas de groupe réactif polymérisable par ouverture de cycle, et un troisième monomère en tant que monomère non réticulable comprenant un monomère éthylénique insaturé,
le premier monomère comprend un ou plusieurs parmi 3-(glycidoxypropyl)triméthoxysilane et 2-(3,4-époxycyclohexyl)éthyltriéthoxysilane,
le deuxième monomère comprend l'un ou plusieurs parmi le triméthacrylate de triméthylolpropane, le diméthacrylate de triéthylèneglycol, le diacrylate de 1,6-hexanediol et le diméthacrylate de 1,6-hexanediol,
le troisième monomère comprend un ou plusieurs parmi un monomère à base d'acide (méth)acrylique, un monomère non de type acide (méth)acrylique, et un monomère à base de styrène à titre de monomère éthylénique insaturé et
une somme des poids des premier et second monomères est de 3 à 5 % en poids sur la base du poids total de monomères du mélange de monomères.

2. Émulsion selon la revendication 1, dans laquelle la partie noyau comprend une pluralité de chaînes principales réticulées et de chaînes latérales liées aux chaînes principales, dans laquelle les chaînes latérales comprennent des groupes éther cyclique.

3. Émulsion selon la revendication 2, dans laquelle les chaînes latérales comprennent des groupes époxy.

4. Émulsion selon la revendication 3, dans laquelle l'émulsion a une viscosité de 50 à 1 000 cps et une température de transition vitreuse de 25 à 55 °C.

5. Procédé de préparation d'une émulsion, le procédé comprenant :
préparation d'un milieu alcalin aqueux comprenant une résine soluble dans un alcali dissoute dans celui-ci ;
ajout d'un mélange de monomères au milieu alcalin aqueux ; et
polymérisation en émulsion du mélange de monomères,
l'émulsion étant composée de particules de latex, chacune des particules de latex comprenant une partie noyau formée d'une matrice de polymère ayant une structure de réseau interne ; et une partie enveloppe qui entoure la partie noyau ;
dans laquelle le mélange de monomères comprenant un premier monomère en tant que monomère réticulable possédant un groupe réactif polymérisable par ouverture de cycle, un second monomère en tant que monomère réticulable multifonctionnel ne possédant pas de groupe réactif polymérisable par ouverture de cycle, et un troisième monomère en tant que monomère non réticulable comprenant un monomère éthylénique insaturé,
le premier monomère comprend un ou plusieurs parmi 3-(glycidoxypropyl)triméthoxysilane et 2-(3,4-époxycyclohexyl)éthyltriéthoxysilane,
le deuxième monomère comprend l'un ou plusieurs parmi le triméthacrylate de triméthylolpropane, le diméthacrylate de triéthylèneglycol, le diacrylate de 1,6-hexanediol et le diméthacrylate de 1,6-hexanediol,
le troisième monomère comprend un ou plusieurs parmi un monomère à base d'acide (méth)acrylique, un monomère non de type acide (méth)acrylique, et un monomère à base de styrène à titre de monomère éthylénique insaturé et
une somme des poids des premier et second monomères est de 3 à 5 % en poids sur la base du poids total de monomères du mélange de monomères.

6. Procédé selon la revendication 5, dans lequel la résine soluble dans un alcali a un poids moléculaire moyen en poids de 5 000 à 30 000 g/mole, une température de transition vitreuse de 30 à 120 °C, et un indice d'acide de 70 à 180 mg de KOH/g.

7. Procédé selon la revendication 5, dans lequel le premier monomère comprend des monomères ayant des groupes époxy en tant que groupes réactifs polymérisables par ouverture de cycle, et, dans la polymérisation en émulsion, au moins une partie des groupes époxy ne sont pas polymérisés.

8. Procédé selon la revendication 7, dans lequel, dans la polymérisation en émulsion, le nombre de groupes époxy non polymérisés est supérieur au nombre de groupes époxy polymérisés.

9. Procédé de formation d'un film de revêtement, le procédé comprenant :
préparation d'une composition de revêtement comprenant l'émulsion selon la revendication 1 ;
application de la composition de revêtement sur un substrat ; et
séchage de la composition de revêtement appliquée.

10. Procédé selon la revendication 9, dans lequel un degré de réticulation d'une partie noyau de l'émulsion après le séchage est supérieur à un degré de réticulation de la partie noyau de l'émulsion avant le séchage.

11. Procédé selon la revendication 10, dans lequel le séchage est effectué à une température de 20 à 100 °C.
